# EUROPEAN PATENT SPECIFICATION

(11) **EP 0 751 534 B1**
(45) Date of publication and mention of the grant of the patent: **30.05.2001**
(21) Application number: 96110253.0
(22) Date of filing: 25.06.1996
(51) Int. Cl.: H01B 3/30

(54) **Insulated electric wire**
Isolierter elektrischer Draht
Fil électrique isolé

(30) Priority: 29.06.1995 JP 16402095; 03.10.1995 JP 25659395
(43) Date of publication of application: 02.01.1997
(73) Proprietor: OPTEC DAI-ICHI DENKO CO., LTD., Amagasaki-shi, Hyogo (JP); DAINICHISEIKA COLOR & CHEMICALS MFG. CO. LTD., Chuo-ku Tokyo (JP)
(72) Inventor: Doshita, Hideo, Optec Dai-ichi Denko Co., Ltd., Amagasaki-shi, Hyogo (JP); Koyano, Masahiro, Optec Dai-ichi Denko Co., Ltd., Amagasaki-shi, Hyogo (JP); Goto, Akihiro, Optec Dai-ichi Denko Co., Ltd., Amagasaki-shi, Hyogo (JP); Ishimoto, Kazuhisa, Optec Dai-ichi Denko Co., Ltd., Amagasaki-shi, Hyogo (JP); Tai, Makoto, Optec Dai-ichi Denko Co., Ltd., Amagasaki-shi, Hyogo (JP)
(74) Representative: Hansen, Bernd, Dr. Dipl.-Chem.

(56) References cited:
- EP-A- 0 365 877
- US-A- 3 922 465
- PATENT ABSTRACTS OF JAPAN vol. 095, no. 005, 30 June 1995 & JP 07 037438 A (OPTEC DAI ICHI DENKO CO LTD), 7 February 1995,

## Description

### Field of the Invention

The present invention relates to an insulated electric wire which is suited for soldering and is used as windings or the like for electric equipments.

### Background of the invention

Hitherto, there has been widely used an insulated electric wire covered with a polyurethane insulating material in relation with the need of soldering. That is, with such a wire, the soldering is facile because an applied coat of the insulating material on the conductor melts and decomposes by heat of soldering without the need of peeling off the coat physically. With recent progress of electric equipments toward a more reduced size and an enhanced performance, the electric equipments are used for various purposes and in various environments. However, in a relative hot environment, electric components are required to have a heat-resisting property, so that the using of the conventional electric wire insulated with a coat of the polyuretane material is not appropriate.

Thus, instead of the insulated electric wire having a coat of polyurethane, other insulated electric wires have been developed and brought partially into use, in which are coated with an insulating material, of a modified polyester or a modified polyester imide which is suited for soldering without the need of peeling off it physically.

However, even with those insulated electric wire having a coat of the modified polyester or the modified polyester imide, it is impossible to cope with a recent trend of an expanded use of electrical equipments into a hot environment. Therefore, there are much needs for development of a new insulated electric wire which has a strong heat-resisting property to the hot environment and is favorable to soldering , i.e. being easy to handle owing to a thermal decomposition at a fast pace.

Besides, in manufacturing such insulated electric wires, when the coating material applied to the conductor is baked, it is desired, from the aspect of a constant quality, that the coating material interacts effectively with a wide range of the baking temperature. Particularly, where a large-scale furnace built for mass production is used for baking, it is essential because the inside temperature of the furnace is uneven with a great variety.

JP 07 037 438 A discloses an insulated electric wire having an insulating layer formed by coating and baking a paint of polyamide-imide produced by the reaction of an anhydrotrimellitic acid and an aliphatic dicarboxylic acid with a diisocyanate compound of a mole equal approximately to a total mole of both the acids.

EP 0 365 877 A2 describes an insulated wire comprising a conductor coated and baked thereon with an insulating lacquer, the insulating lacquer comprising (a) 100 parts by weight of a polyamide-imide resin having a molecular weight corresponding to a reduced specific viscosity of from 0.1 to 1.0 and (b) 75 to 400 parts by weight of a stabilized polyisocyanate compound derived from diphenylmethanediisocyanate. The polyamide-imide resin may be obtained from at least one tricarboxylic anhydride which is reacted with at least one diisocyanate. A portion of the tricarboxylic anhydride may be replaced by at least one dicarboxylic acid, at least one tetracarboxylic dianhydride or at least one dicarboxylic acid with at least one tetracarboxylic anhydride. Examples of the dicarboxylic acid include isophthalic acid, terephthalic acid and adipic acid. The polyamide-imide may be blended with an epoxy resin.

US 3,922,465 discloses a solderable and thermostable insulted wire which comprises an insulating layer as an under layer which is formed by applying a polyester-imide wire enamel which includes polyester-imide or polyesteramide-imide and has 5-membered imide groups and ester bonds in the molecule to a conductor and baking, wherein said polyester-imide wire enamel mainly comprises the reaction product of (A) a dibasic carboxylic acid free of a 5-membered imide ring, a derivative thereof or a mixture thereof, (B) a dibasic carboxylic acid which has at least one 5-membered imide ring, a derivative thereof or a mixture thereof, (C) a tri- and/or higher-hydric aliphatic alcohol and (D) a dihydric alcohol, and an insulated layer as an over layer which is formed by applying a polyimide wire enamel or a polyamide-imide wire enamel to said under layer and baking.

However, the insulating layers of the wires according to the above documents do not have a sufficient favorability to soldering and/or a sufficient heat stability.

### Summary of the invention

It is , therefore, a primary objective of the present invention to provide an insulated electric wire suited for soldering which has two properties contrary to one other, i.e. a high degree of heat resistance to a hot environment and a high degree of favorability to soldering, and can be mass-produced with a constant and high quality by allowing an effective interaction with a wide range of a baking temperature in process of manufacturing.

It is another objective of the present invention to provide an insulated electric wire suited for soldering which is superior also in damp resistance.

It is another objective of the present invention to provide an insulated electric wire suited for soldering which has other properties such as softening-resistance, abrasion-resistance and cohesiveness according to various purposes.

With the above and other objectives in view, first of all, the present invention provides an insulated electric wire (hereinafter, called as " first insulated electric wire ") suited for soldering which comprises a conductor and a coating insulating material applied to the conductor and then baked wherein the coating insulating material is of a polyamide-imide formed from reaction of an anhydrotrimellitic acid, aliphatic and aromatic dicarboxylic acids and a diisocyanate compound with a mole proportion of the diisocyanate compound being approximately equal to a mole proportion of all of the aforesaid acids (i.e. anhydrotrimellitic acid, aliphatic and aromatic dicarboxylic acids ).

In addition, the present invention provides an insulated electric wire (hereinafter, called as " second insulated electric wire ") suited for soldering which comprises a conductor and a coating insulating material applied to the conductor and then baked wherein the coating insulating material contains a polyamide-imide as a main component and an epoxy resin, the polyamide-imide being formed from reaction of an anhydrotrimellitic acid, a dicarboxylic acid including an aliphatic dicarboxylic acid in a mole proportion of more than 70%, and a diisocyanate compound with a mole proportion of the diisocyanate compound being approximately equal to a mole proportion of all of the aforesaid acids (i.e. anhydrotrimellitic acid and aliphatic dicarboxylic acid).

### Detailed description of the invention

The polyamide-imide, adopted for the coating insulating material in the first and second insulated electric wires of the present invention, differs from a popular polyamide-imide in which an anhydrotrimellitic acid and a diamine are used as reactants, and is a product formed from reaction of an anhydrotrimellitic acid, a dicarboxylic acid and a diisocyanate compound. This product has, in the principal chain, imido links based on reaction between an acid anhydride structure of the anhydrotrimellitic acid and an isocyanate group, and amido links based on reaction between the isocyanate group and the carboxyl groups of the anhydrotrimellitic acid and dicarboxylic acid.

In the first insulated electric wire, an aliphatic dicarboxylic acid and an aromatic dicarboxylic acid are used together as the dicarboxylic acid component, so that the polyamide-imide has an arrangement in which an aliphatic group and an aromatic group coexist in the principal chain. On the other hand, in the second insulated electric wire, for the dicarboxylic acid component of the polyamide-imide, it is allowed to use the aliphatic dicarboxylic acid in preference, while the insulating material contains an epoxy resin.

The insulated electric wire has an insulating layer formed by the application and baking of the aforesaid insulating material to the conductor, and is characterized in that it is superior in heat resistance to a hot environment and in favorability to soldering, and can be mass- produced with a constant and high quality from an effective interaction with a wide range of a baking temperature, especially when processed in a large-scale heating furnace.

It is thinkable that the above-mentioned advantages of the insulated electric wire are obtained from the following causes. The enhanced heat-resistance to a hot environment depends upon the structure of an aromatic polyimide based on the anhydrotrimellitic acid. The favorability to soldering or the thermal decomposability in soldering depends upon the structure of an aliphatic polyamide based on the aliphatic dicarboxylic acid. For the effective interaction with a wide range of the baking temperature, in the first electric wire, a constituent of the aromatic dicarboxylic acid serves to keep a balance between the heat resistance to a hot environment and the favorability to soldering, whereas, in the second electric wire, the presence of a hydroxyl group held in side chain of the epoxy resin serves to enhance a uniform baking of the applied insulating material. Further, in the second electric wire, to the advantage, the presence of an ether link and an aromatic link held in the epoxy resin protects the influence of dampening and thus serves to enhance the damp-resistance of the insulating layer, while the aforesaid hydroxyl group serves also to enhance a fusibility of a solder to be used.

The preparation of the aforesaid polyamide-imide is made by the reaction resulted from dissolving in a suitable solvent and then heating the acid component of anhydrotrimellitic acid and dicarboxylic acid and the component of diisocyanate compound. For satisfactory synthesis of the polyamide-imide, it is required to make a reaction take place between every acid component of the aforesaid acids and the component of diisocyanate compound in approximately equal proportions by mole in respect of the former component to the latter component. Specifically, in the present invention, the mole ratio of the diisocyanate compound to every acid component of the aforesaid acids is in a range of 0.9 : 1.0 to 1.1 : 1.0 . This means that, if the used amount of the diisocyanate compound is less than 0.9 mole per 1.0 mole of every acid component, the applied coat of the insulating material becomes worse in appearance and flexibility, and, if the used amount of the same is more than 1.1 mole per 1.0 mole of every acid component, the coating insulating material gets unsuited for practical use due to gelling.

For the first insulated electric wire where the aliphatic dicarboxylic acid and the aromatic dicarboxylic acid are used together as the dicarboxylic acid component, the mole ratio of the aliphatic dicarboxylic acid to every acid component is in a range of 0.2 : 1.0 to 0.7 : 1.0 . This means that, if the used amount of the aliphatic dicarboxylic acid is less than 0.2 mole per 1.0 mole of every acid component, the favorability to soldering is inferior, and, if the used amount of the same is more than 0.7 mole, the effective range of the baking temperature with which the applied insulating material interacts becomes narrow so as to lower the heat-resistance to a hot environment. Besides, the mole ratio of the anhydrotrimellitic acid to every acid component is in a range of 0.2 : 1.0 to 0.7 : 1.0 . This means that, if the used amount of the anhydrotrimellitic acid is less than 0.2 mole per 1.0 mole of every acid component, the heat resistance declines to a great degree, and, if the used amount of the same is more than 0.7 mole, the favorability to soldering declines remarkably.

For the second insulated electric wire where the aliphatic dicarboxylic acid is used mainly as the dicarboxylic acid component, it is preferable to use only the aliphatic dicarboxylic acid generally from the aspect of the favorability to soldering, but it is allowed to use together with a small quantity of the aromatic dicarboxylic acid ( in less than 30 % mole proportion ) if not protecting from attaining the objective of the invention. Besides, the mole ratio of the anhydrotrimellitic acid to every acid component is in a range of 0.4 : 1.0 to 0.8 : 1.0 . This means that, if the used proportion of the anhydrotrimellitic acid is less than the desired range, the heat resistance declines to a great degree, and, if the used proportion of the same is more than the desired range, the favorability to soldering declines remarkably.

For the aliphatic dicarboxylic acid used for synthesis of the aforesaid polyamide-imide, various saturated dicarboxylic acids can be adopted. The preferable particular examples are the ones having two or more carbons in an alkylene group, such as a succinic acid, an adipic acid, an azelaic acid, a sebacic acid, a didodecanoic acid, and so on. It is allowed to use two or more of the recited ones together.

For the aromatic dicarboxylic acid, the preferable particular examples are a terephthalic acid, an isophthalic acid, a phthalic acid and so on, inclusive of the ones having a plurality of aromatic rings. It is allowed to use two or more of the recited ones together. As examples of the dicarboxylic acid having a plurality of aromatic rings, there can be recited a biphenyl-4,4'-dicarboxylic acid, a thiodibenzonic acid, a 4,4'-hydroxydibenzonic acid, a thiobenzonic acid, a 4,4'-carbonyldibenzonic acid, a 4,4'-sulfonyldibenzonic acid, a 4,4'-naphthalenedibenzonic acid, a 1,5-naphthalenedibenzonic acid, a 2,6-naphthalenedibenzonic acid, and so on.

For the diisocyanate compound, the particular examples are toluene diisocyanate, hexamethylene diisocyanate, 4,4'-diphenylmethane diisocyanate, 4,4'-diphenyl ether diisocyanate, 1,5-naphthalene diisocyanate, and so on. It is allowed to use two or more of the recited ones together.

The polyamide-imide synthesized from any of the above-recited substances makes up the coating insulating material by itself in the first insulated electric wire, but, in the second insulated electric wire, the polyamide-imide makes up the coating insulating material in combination with the epoxy resin component.

The coating insulating material for the second insulated electric wire is required to contain 1 to 30 parts by weight of the epoxy resin per 100 parts of the polyamide-imide. This means that, if the weight proportion of the epoxy resin is less than 1 part, the use of the epoxy resin is not effective because the effective range of the baking temperature with which the applied insulating material interacts becomes narrow and the favorability to soldering declines. Reversely, if the weight proportion of the epoxy resin is more than 30 parts, the heat resistance to a hot environment declines to the disadvantage

For the aforesaid epoxy resin, there is no limitation to specific ones. As examples, use can be made of a bisphenol A type epoxy resin, a bisphenol F type epoxy resin, a bisphenol S type epoxy resin, a novolak type epoxy resin, a bisphenol bromide A type epoxy resin, an alicyclic type epoxy resin, a tetrafunctional epoxy resin, and so on. Among the above recited ones, the bisphenol bromide A type epoxy resin is most preferable from the aspect of the favorability to soldering.

### ( First insulated electric wire )

In process of manufacturing the insulated electric wires, the aforesaid coating insulating material is treated with a suitable diluent for adjusting its viscosity, and then is applied, in a normal way, to a conductor such as a soft copper wire, and finally baked so that an insulating layer is formed on the conductor. The thickness of the layer varies according to the diameter of separate conductors, but is typically 5 to 50µm. The required thickness is realized normally by the repeat of applying and baking some times.

The insulated electric wire of the present invention covers a modification having two or more coated insulating layers on the conductor in which one or two additional insulating layers are formed by applying the insulating coating material to the already existing layer on the conductor and baking it. Such a multi-coated wire can allot the required different properties separately to each of the layers. Particularly, the external covered layer can be made to possess some properties such as softening-resistance, abrasion resistance, cohesiveness and so on, whereas the favorability to soldering can be secured by the internal layer of the polyamide-imide. In this case, the favorability of the insulated electric wire to soldering is secured effectively because the external covered layer removed as a result that the internal layer leaves from the surface of the conductor by thermal decomposition even if the properties of the external layer is inferior in the thermal decomposability in soldering. This effect applies also to a case of having two or more external layers.

Thus, the coating insulating material used for the external layer is not limited to specific ones. According to the required properties, preferable examples are as follows. For the need of heat resistance or softening-resistance, there can be recited a poly imide, another polyamide-imide different from the internal layer side polyamide-imide. For the need of abrasion resistance, there is a polyamide-imide such as 6,6-nylon ( polyhexamethylene adipamide ). For the need of maintaining the shape of coiled wires in electric motors and transformers, there is an insulating material having a property of cohesiveness, as shown below.

Particularly, as an example of the above-mentioned polyamide-imide different from the internal layer, it is preferable to use that which contains, as a main component, a common polyamide-imide produced by reaction between an anhydrotrimellitic acid and a diamine. However, it is possible to use a different polyamide-imide containing other constituents. Further, as examples of the above-mentioned material having a cohesiveness, there can be used conventional cohesive insulating materials for a coat of insulated electric wires, such as a polyvinyl butyral resin, an epoxy resin, a phenoxy resin, a copolyamide resin, a polysulfone resin, a polyester resin, and a polyester imide. It is allowed to use two or more of these recited ones together.

The present invention becomes clearer from the description based on the comparison between the following embodiment examples and reference examples.

### Embodiment example 1

For preparation of the coating insulating material of polyamide-imide, the required components of 0.2 mole of anhydrotrimellitic acid, 0.1 mole of terephthalic acid, 0.7 mole of adipic acid and 1.0 mole of 4,4'-diphenylmethane diisocyanate were added into N-methyl-2-pyrrolidone, and were made to react at 100 °C for one hour, subsequently at 120 °C for two hours, and then they were heated gradually up to 140 °C in one hour and further were made to react for one hour, and then were made cool and lastly were diluted with xylene. The coating insulating material of polyamide-imide was applied repeatedly to the surface of a soft copper wire conductor having a diameter of 0.5 mm and was baked repeatedly by the time when a coated layer of 16 *µ*m in thickness was formed on the conductor, so that an insulated electric wire suited for soldering was made.

### Embodiment example 2

Compared with the above-described embodiment example 1, the used amount of each of the components of anhydrotrimellitic acid, terephthalic acid and adipic acid were changed into 0.4 mole, 0.3 mole and 0.3 mole, respectively. Through the same processes as in the embodiment example 1, an insulated electric wire suited for soldering was made.

### Embodiment example 3

Compared with the above-described embodiment example 1, the used amount of each of the components of anhydrotrimellitic acid, terephthalic acid and adipic acid were changed into 0.7 mole, 0.1 mole and 0.2 mole, respectively. Through the same processes as in the embodiment example 1, an insulated electric wire suited for soldering was made.

### Embodiment example 4

Instead of the components of terephthalic acid and adipic acid in the embodiment example 3, 0.1 mole of isophthalic acid and 0.2 mole of azelaic acid were used respectively. Through the same processes, an insulated electric wire suited for soldering was made.

### Reference example 1

Compared with the above-described embodiment example 1, the used amount of each of the components of anhydrotrimellitic acid, terephthalic acid and adipic acid were changed into 0.1 mole, 0.1 mole and 0.8 mole, respectively. Through the same processes as in the embodiment example 1, an insulated electric wire suited for soldering was made.

### Reference example 2

Compared with the above-described embodiment example 1, the used amount of each of the components of anhydrotrimellitic acid, terephthalic acid and adipic acid were changed into 0.8 mole, 0.1 mole and 0.1 mole, respectively. Through the same processes as in the embodiment example 1, an insulated electric wire suited for soldering was made.

### Reference example 3

Compared with the above-described embodiment example 1, the component of terephthalic acid was not used, and the used amount of each of the components of anhydrotrimellitic acid and adipic acid were changed into 0.5 mole and 0.5 mole, respectively. Through the same processes as in the embodiment example 1, an insulated electric wire suited for soldering was made.

### Reference example 4

Compared with the above-described embodiment example 1, another coating insulating material of a modified polyester imide, which is available in the goods named FS-2 from a Japanese maker of Dainichi Seika Co. Ltd., was used, instead of the coating insulating material of polyamide-imide. An insulated electric wire suited for soldering was made with a coated layer of 16*µ*m in thickness as in the embodiment example 1.

### Reference example 5

Compared with the above-described embodiment example 1, the used amount of the component of 4,4'-diphenylmethane diisocyanate was changed into 0.8 mole. Through the same processes as in the embodiment example 1, an insulated electric wire suited for soldering was made.

### Reference example 6

Compared with the above-described embodiment example 1, the used amount of the component of 4,4'-diphenylmethane diisocyanate was changed into 1.2 mole. In the same processes as in the embodiment example 1, the reaction was made to take place, so that an coating insulating material of polyamide-imide could not be produced because the reactant gelled.

### Embodiment example 5

With the coating insulating material of the polyamide-imide prepared in the embodiment example 3, a first layer having a thickness of 8 *µ*m was formed on the conductor of a soft copper wire having a diameter of 0.5 mm by the repeated applying and baking of the coating insulating material. Next, a different coating insulating material of polyimide, which is available in the goods named Pyre ML from a maker of Du Pont Co., Ltd., was applied repeatedly to the already existing first layer and was baked repeatedly one after another by the time when a coated second layer of 8*µ*m in thickness was formed on the first layer, so that a double-covered, insulated electric wire suited for soldering was made with an internal layer and an external layer.

### Reference example 7

With the coating insulating material of the modified polyester imide prepared in the reference example 4, the coated internal layer was formed. In other aspects, through the same processes as in the embodiment example 5, a double-covered, insulated electric wire suited for soldering was made with the internal layer and the external layer.

### Embodiment example 6

With the coating insulating material of the polyamide-imide prepared in the embodiment example 3, a coated first layer having a thickness of 8 *µ*m was formed on the conductor of a soft copper wire having a diameter of 0.5 mm by the repeated applying and baking of the coating insulating material. Next, a different coating insulating material of polyamide-imide, which is available in the goods named H I 405 from a Japanese maker of Hitachi Kasei Co., Ltd., was applied repeatedly to the already existing first layer and was baked repeatedly one after another by the time when a coated second layer of 8*µ*m in thickness was formed on the first layer, so that a double-covered, insulated electric wire suited for soldering was made with an internal layer and an external layer.

### Reference example 8

With the coating insulating material of the polyester imide prepared in the reference example 4, the coated internal layer was formed. In other aspects, through the same processes as in the embodiment example 6, a double-covered, insulated electric wire suited soldering was made with the internal layer and the external layer.

### Embodiment example 7

With the coating insulating material of the polyamide-imide prepared in the embodiment example 3, a coated first layer having a thickness of 14 *µ*m was formed on the conductor of a soft copper wire having a diameter of 0.5 mm by the repeated applying and baking of the coating insulating material. Next, a different coating insulating material of 6,6-nylon, which is prepared by dissolving in a cresylic acid a material of so-called Amylan CM3001N (available from a Japanese maker of Torey Co., Ltd.), was applied repeatedly to the already existing first layer and was baked repeatedly one after another by the time when a coated second layer of 2*µ*m in thickness was formed on the first layer, so that a double-covered, insulated electric wire suited for soldering was made with an internal layer and an external layer.

### Reference example 9

With the coating insulating material of the polyester imide prepared in the reference example 4, the coated internal layer was formed. In other aspects, through the same processes as in the embodiment example 7, a double-covered, insulated electric wire suited for soldering was made with the internal layer and the external layer.

### Embodiment example 8

With the coating insulating material of the polyamide-imide prepared in the embodiment example 3, a coated first layer having a thickness of 8 *µ*m was formed on the conductor of a soft copper wire having a diameter of 0.5 mm by the repeated applying and baking of the coating insulating material. Next, a different, cohesive coating insulating material of epoxy resin, which is available in the goods named Isopoxi 506 from a Japanese maker of Nippon Syokuzai Co., Ltd., was applied repeatedly to the already existing first layer and was baked repeatedly one after another by the time when a cohesive second layer of 8*µ*m in thickness was formed on the first layer, so that a double-covered, insulated electric wire suited for soldering was made with an internal layer and an external layer.

### Reference example 10

With the coating insulating material of the modified polyester imide prepared in the reference example 4, the coated internal layer was formed. In other aspects, through the same processes as in the embodiment example 8, a double-covered, insulated electric wire suited for soldering was made with the internal layer and the external layer.

### Embodiment example 9

For the cohesive insulating material, there was used the one of polyamide available in the goods named PA-27 from Dainichi Seika Co., Ltd. In other aspects, through the same processes as in the embodiment example 8, a double-covered, insulated electric wire suited for soldering was made with the internal layer and the external layer.

### Reference example 11

With the coating insulating material of the polyester imide prepared in the reference example 4, the coated internal layer was formed. In other aspects, through the same processes as in the embodiment example 9, a double-covered, insulated electric wire suited for soldering was made with the internal layer and the external layer.

For each of the insulated electric wires obtained in the above-described embodiment examples 1 to 9 and the reference examples 1 to 11 (exclusive of one reference example 6 ), various tests were conducted in respect of outward appearance, flexibility, softening-resistance, favorability to soldering, heat and shock resistance, effective range of the baking temperature ( for the embodiment examples 1 to 5 and the reference example 3), abrasion resistance ( for the embodiment examples 1 to 5 and the reference example 9), and cohesiveness ( for the embodiment examples 8, 9 and the reference example 10, 11). The outcomes of these tests are shown hereinafter in Table 1 and 2. Each of the respective tests is conducted according to the appropriate provisions of JIS ( Japanese Industry Standard ).

| | |
|---|---|
| Outward appearance | JIS C 3003 4. |
| Flexibility | JIS C 3003 8.1 ( 2 ) |
| Heat and shock resistance | JIS C 3003 13. 1 ( 2 ) |
| Softening-resistance ( Temperature at which the softening begins ) | JIS C 3003 12. ( 2 ) |
| Favorability to soldering ( Time took for thermal decomposition ) | JIS C 3003 16. |
| Abrasion resistance | JIS C 3003 3. 10 |
| Cohesiveness | JIS C 3003 17. |
| Effective range of the baking temperature | under conditions that the softening begins at a temperature of more than 340°C, thermal decomposition takes less than 6 seconds at 460°C, and a linear velocity is constant. |

**Table 1**

| | Appearance | Heat and shock resistance | Softening resistance ( °C ) | Favorability to soldering ( seconds at 460°C ) | Effective range of the baking temperature(°C) |
|---|---|---|---|---|---|
| Embodiment example 1 | Good | Good as kept to the same diameter | 350 | 2 | 60 |
| Embodiment example 2 | Good | Good as kept to the same diameter | 380 | 3 | 70 |
| Embodiment example 3 | Good | Good as kept to the same diameter | 410 | 5 | 50 |
| Embodiment example 4 | Good | Good as kept to the same diameter | 400 | 4 | 50 |
| Reference example 1 | Good | Good as kept to the same diameter | 300 | 2 | ― |
| Reference example 2 | Good | Good as kept to the same diameter | 400 | 10 | ― |
| Reference example 3 | Good | Good as kept to the same diameter | 360 | 3 | 30 |
| Reference example 4 | Good | Good as kept to the same diameter | 320 | 8 | ― |
| Reference example 5 | Poor | Bad as expanded to twice the diameter | 340 | 2 | ― |

From outcomes of the various tests shown in Table 1, the followings became clear. The single-coated, insulated electric wires of the present invention in the embodiment examples 1 to 4 were remarkably superior in heat resistance and favorability to soldering in comparison with the conventional insulated electric wire of modified polyester imide in the reference example 4. When compared with the insulated electric wire in the reference example 3, which was coated with an insulating layer using the insulating material of polyamide-imide formed from reaction among anhydrotrimellitic acid, aliphatic dicarboxylic acid and diisocyanate compound, the coated electric wires of the invention in the embodiment examples 1 to 4 had an equal degree of heat resistance and an equal or greater degree of favorability to soldering, and are suitable for mass production because the effective range of the baking temperature in the insulating material of polyamide-imide is 50 to 70 °C of about two times, and had a sufficient degree of other required properties.

From contrast of the embodiment examples 1 to 4 with the reference examples 1 and 2, an insulated electric wire having a satisfied degree of both of the heat resistance and favorability to soldering can be obtained where, in the proportions of the components of the insulating material of polyamide-imide, the mole ratio of the aliphatic dicarboxylic acid to every acid component is in a range of 0.2 : 1.0 to 0.7 : 1.0, and the mole ratio of the anhydrotrimellitic acid to every acid component is in a range of 0.2 : 1.0 to 0.7 : 1.0 . Further, from contrast among the embodiment examples 1 to 3, both of the heat resistance and favorability to soldering can be controlled duly by changing the proportions of the above-mentioned components within the above respective ranges. Incidentally, as obvious from the outcomes of the reference example 5, the outward appearance and the heat and shock resistance in the coated insulating layer became worse where the used amount of diisocyanate compound was remarkably less than that of every acid component.

**Table 2**

| | Appearance | Heat and shock resistance | Softening resistance ( °C ) | Favorability to soldering ( seconds at 460°C ) | Abrasion resistance | Cohesiveness at 160 °C for ten minutes |
|---|---|---|---|---|---|---|
| Embodiment example 5 | Good | Good as kept to the same diameter | 430 | 8 | ― | ― |
| Reference example 7 | Good | Good as kept to the same diameter | 340 | 12 | ― | ― |
| Embodiment example 6 | Good | Good as kept to the same diameter | 420 | 8 | ― | ― |
| Reference example 8 | Good | Good as kept to the same diameter | 330 | 12 | ― | ― |
| Embodiment example 7 | Good | Good as kept to the same diameter | 410 | 5 | 1100 | ― |
| Reference example 9 | Good | Good as kept to the same diameter | 300 | 8 | 750 | ― |
| Embodiment example 8 | Good | Good as kept to the same diameter | 410 | 8 | ― | 600 |
| Reference example 10 | Good | Good as kept to the same diameter | 320 | 12 | ― | 600 |
| Embodiment example 5 | Good | Good as kept to the same diameter | 400 | 5 | ― | 1000 |
| Reference example 11 | Good | Good as kept to the same diameter | 300 | 8 | ― | 1000 |

Table 2 shows the insulated electric wires coated with two insulating layers which includes an internal layer of the insulating material favor to soldering and an external layer of a different insulating material. Compared with the double-coated electric wires in the reference examples 7 to 11 using the conventional insulating material of modified polyester imide for the internal layer, the insulated electric wires of the present invention in the embodiment example 5 to 9 using the specific polyamide-imide for the internal layer had a greatly enhanced heat resistance and an improved favorability to soldering, and had a sufficient degree of other required properties. Where the polyamide were used for the external layer as in the embodiment example 7 and the reference example 9, the abrasion resistance was greatly enhanced.

### ( Second insulated electric wire )

For synthesis of polyamide-imide of the main component in the insulating material, each of the polyamide-imides A1 to A6 shown in the following Table 3 were synthesized through processes in which the required ingredients of anhydrotrimellitic acid, saturated aliphatic dicarboxy acid and diisocyanate in the mole proportions shown respectively in Table 3 were added into N-methyl-2-pyrrolidone, and were made to react at 100 °C for one hour, subsequently at 120 °C for two hours, and then they were heated gradually up to 140 °C in one hour and further were made to react for one hour.

**Table 3**

| Proportions (moles) of ingredients for synthesis of the polyamide-imide component | | | | | | |
|---|---|---|---|---|---|---|
| Ingredients for synthesis of the polyamide-imide | Polyamide-imide | | | | | |
| | A1 | A2 | A3 | A4 | A5 | A6 |
| Anhydrotrimellitic acid | 1.0 | 1.2 | 1.6 | 1.2 | 1.8 | 0.6 |
| Adipic acid | 1.0 | 0.8 | 0.4 | ― | 0.2 | 1.4 |
| Azelaic acid | ― | ― | ― | 0.8 | ― | ― |
| Diisocyanate * | 2.0 | 2.0 | 2.0 | 2.0 | 2.0 | 2.0 |

| | | | | | | |
|---|---|---|---|---|---|---|
| ( * ) 4,4'-diphenylmethalene diisocyanate | | | | | | |

Each of the insulating materials shown by the embodiment examples 10 to 17 in the following Table 4 was prepared by adding an epoxy resin and a diluent of xylene into each of solutions of the above synthesized polyamide-imide, and then mixing them at 60 °C for one hour. The prepared insulating materials were applied repeatedly to the surface of a soft copper wire conductor having a diameter of 0.5 mm and was baked repeatedly one after another by the time when a coated layer of 16 *µ*m in thickness was formed on the conductor, so that the respective single-coated insulated electric wire suited for soldering were made. For the epoxy resin (Ep 1, Ep 2, Ep 3), the following specific ones were used to the polyamide-imide:
- Ep 1: Epicout EP1001 (bisphenol A type), available from a japanese maker of Yuka Shell Co., Ltd,
- Ep 2: YPF - 2001 (bisphenol F type), available from a japanese maker of Touto Kasei Co., Ltd.,
- Ep 3: YDB - 406 (bisphenol bromide A type), available from a japanese maker of Touto Kasei Co., Ltd.

Each of the insulating materials shown by the reference examples 12 to 16 in the following Table 5 was different in combination or proportions of the used polyamide-imide and epoxy resin. Through the same processes as in the above-mentioned embodiment examples 10 to 17, an insulated electric wire suited for soldering was made.

**Table 4**

| Composition of the insulating material ( numbers show parts by weight ) | | | | | | | | |
|---|---|---|---|---|---|---|---|---|
| Embodiment examples | 10 | 11 | 12 | 13 | 14 | 15 | 16 | 17 |
| Polyamide-imide* | | | | | | | | |
| A1 ( 5/5 ) | 100 | ― | ― | ― | ― | ― | ― | ― |
| A2 ( 6/4 ) | ― | 100 | 100 | 100 | ― | 100 | 100 | ― |
| A3 ( 8/2 ) | ― | ― | ― | ― | 100 | ― | ― | ― |
| A4 ( 6/4 ) | ― | ― | ― | ― | ― | ― | ― | 100 |
| Epoxy resin Ep1 | 20 | 20 | 1 | 30 | 20 | ― | ― | 10 |
| Epoxy resin Ep2 | ― | ― | ― | ― | ― | 20 | ― | ― |
| Epoxy resin Ep3 | ― | ― | ― | ― | ― | ― | 20 | ― |

| | | | | | | | | |
|---|---|---|---|---|---|---|---|---|
| ( * ) The numbers in ( ) in the section of the polyamide-imide show a mole ratio of anhydrotrimellitic acid to dicarboxylic acid. | | | | | | | | |

**Table 5**

| Components of the insulating material ( numbers show parts by weight ) | | | | | |
|---|---|---|---|---|---|
| Reference examples | 12 | 13 | 14 | 15 | 16 |
| Polyamide-imide* | | | | | |
| A2 ( 6/4 ) | ― | ― | 100 | 100 | 100 |
| A5 ( 9/1 ) | ― | 100 | ― | ― | ― |
| A6 ( 3/7 ) | 100 | ― | ― | ― | ― |
| Epoxy resin Ep 1 | 20 | 20 | 0.5 | 40 | ― |

| | | | | | |
|---|---|---|---|---|---|
| ( * ) The numbers in ( ) in the section of the polyamide-imide show a mole ratio of anhydrotrimellitic acid to dicarboxylic acid. | | | | | |

For each of the insulated electric wires obtained in the above-described embodiment examples 10 to 16 and the reference examples 12 to 16, various tests were conducted in respect of outward appearance, pinholes, close adherence, favorability to soldering, softening-resistance, damp and heat resistance, effective range of the baking temperature. The outcomes of these tests are shown hereinafter in Table 6. Each of the respective tests is conducted according to the appropriate provisions of JIS ( Japanese Industry Standard ).

| | |
|---|---|
| Outward appearance | JIS C 3003 4. |
| Pinholes | JIS C 3003 6. |
| Close adhesiveness | JIS C 3003 9. |
| Favorability to soldering ( Time took for thermal decomposition ) | JIS C 3003 16. |
| Softening-resistance ( Temperature at which the softening begins ) | JIS C 3003 12. ( 2 ) |
| Damp and heat resistance | With two twisted samples, dielectric breakdown voltage of them was measured after putting them in the moist air of 180 °C with 0.2 percentage of H₂O for 48 hours. |
| Effective range of the baking temperature | under conditions that the softening begins at a temperature of more than 340°C, thermal decomposition takes less than 6 seconds at 460°C, and a linear velocity is constant. |

**Table 6**

| | Appearance | Pinholes (numbers) | Softening resistance (°C) | Favorability to soldering (seconds at 460 °C) | Effective range of the baking temperature (°C) | Close adhesiveness | Heat and shock resistance |
|---|---|---|---|---|---|---|---|
| Embodiment example 10 | Good | 0 | 360 | 2 | 60 | Good | Good |
| Embodiment example 11 | Good | 0 | 410 | 3 | 60 | Good | Good |
| Embodiment example 12 | Good | 0 | 410 | 4 | 40 | Good | Good |
| Embodiment example 13 | Good | 0 | 410 | 2 | 80 | Good | Good |
| Embodiment example 14 | Good | 0 | 470 | 5.5 | 60 | Good | Good |
| Embodiment example 15 | Good | 0 | 410 | 3 | 60 | Good | Good |
| Embodiment example 16 | Good | 0 | 410 | 1 | 70 | Good | Good |
| Embodiment example 17 | Good | 0 | 360 | 4 | 40 | Good | Good |
| Reference example 12 | Good | 0 | 330 | 1.5 | 10 | Good | Good |
| Reference example 13 | Good | 0 | 490 | 10 or more | 10 | Good | Good |
| Reference example 14 | Good | 0 | 405 | 5 | 20 | Good | Bad |
| Reference example 15 | Good | 0 | 320 | 2 | 10 | Good | Good |
| Reference example 16 | Good | 0 | 405 | 5 | 20 | Good | Bad |

From outcomes of the various tests shown in Table 6, the followings became clear. The single-coated, insulated electric wires of the present invention in the embodiment examples 10 to 17 were remarkably superior in heat resistance and favorability to soldering. When compared with the insulated electric wire in the reference example 16, which was coated with an insulating layer using the insulating material of polyamide-imide formed from reaction among anhydrotrimellitic acid, aliphatic dicarboxylic acid and diisocyanate compound, the coated electric wires of the invention in the embodiment examples 10 to 17 was enhanced in favorability to soldering, and satisfactory in damp and heat resistance, and are suitable for mass production because the effective range of the baking temperature in the insulating material of polyamide-imide is 40 to 80 °C of about two to four times, and had a sufficient degree of other required properties.

Accordingly, it is concluded, from contrast of the embodiment examples 11-13, 15, 16 with the reference examples 14-16, that they insulating material is required to contain 1 to 30 parts by weight of the epoxy resin per 100 parts of the poly amide-imide for an insulated electric wire which has a satisfied degree of both of the heat resistance and favorability to soldering and a close adhesiveness. In addition, from contrast of the embodiment examples 10, 11, 14 with the reference examples 12, 13, it is preferable that, in the proportions of the components of the insulating material of polyamide-imide, the mole ratio of the anhydrotrimellitic to the dicarboxylic acid is in a range of 5 : 5 to 8 : 2. Further, from contrast among the embodiment examples 10 to 17, both of the heat resistance and favorability to soldering can be controlled duly by changing the proportions of the above-mentioned constituents of the polyamide-imide and the proportion of the epoxy resin within the above-described respective ranges.

### Embodiment example 18

With the coating insulating material of the polyamide-imide prepared in the embodiment example 11, a first layer having a thickness of 8 *µ*m was formed on the conductor of a soft copper wire having a diameter of 0.5 mm by the repeated applying and baking of the coating insulating material. Next, a different coating insulating material of polyimide, which is available in the goods named Pyre ML from a maker of Du Pont Co., Ltd., was applied repeatedly to the already existing first layer and was baked repeatedly one after another by the time when a coated second layer of 8*µ*m in thickness was formed on the first layer, so that a double-covered, insulated electric wire suited for soldering was made with an internal layer and an external layer.

### Reference example 17

With the coating insulating material of the polyester-imide available in the goods named PA-27 from Dainichi Seika Co., Ltd., the coated internal layer was formed. In other aspects, through the same processes as in the embodiment example 18, a double-covered, insulated electric wire suited for soldering was made with the internal layer and the external layer.

### Embodiment example 19

With the coating insulating material of the polyamide-imide prepared in the embodiment example 11, a coated first layer having a thickness of 8 *µ*m was formed on the conductor of a soft copper wire having a diameter of 0.5 mm by the repeated applying and baking of the coating insulating material. Next, a different coating insulating material of polyamide-imide, which is available in the goods named H I 405 from a Japanese maker of Hitachi Kasei Co., Ltd., was applied repeatedly to the already existing first layer and was baked repeatedly one after another by the time when a coated second layer of 8*µ*m in thickness was formed on the first layer, so that a double-covered, insulated electric wire suited for soldering was made with an internal layer and an external layer.

### Reference example 18

With the coating insulating material of the polyester imide prepared in the reference example 17, the coated internal layer was formed. In other aspects, through the same processes as in the embodiment example 19, a double-covered, insulated electric wire suited soldering was made with the internal layer and the external layer.

### Embodiment example 20

With the coating insulating material of the polyamide-imide prepared in the embodiment example 11, a coated first layer having a thickness of 14 µm was formed on the conductor of a soft copper wire having a diameter of 0.5 mm by the repeated applying and baking of the coating insulating material. Next, a different coating insulating material of 6,6-nylon, which is prepared by dissolving in a cresylic acid a material of so-called Amylan CM3001N (available from a Japanese maker of Torey Co., Ltd.), was applied repeatedly to the already existing first layer and was baked repeatedly one after another by the time when a coated second layer of 2*µ*m in thickness was formed on the first layer, so that a double-covered, insulated electric wire suited for soldering was made with an internal layer and an external layer.

### Reference example 19

With the coating insulating material of the polyester imide prepared in the reference example 17, the coated internal layer was formed. In other aspects, through the same processes as in the embodiment example 20, a double-covered, insulated electric wire suited for soldering was made with the internal layer and the external layer.

### Embodiment example 21

With the coating insulating material of the polyamide-imide prepared in the embodiment example 11, a coated first layer having a thickness of 8 *µ*m was formed on the conductor of a soft copper wire having a diameter of 0.5 mm by the repeated applying and baking of the coating insulating material. Next, a different, cohesive coating insulating material of epoxy resin, which is available in the goods named Isopoxi 506 from a Japanese maker of Nippon Syokuzai Co., Ltd., was applied repeatedly to the already existing first layer and was baked repeatedly one after another by the time when a cohesive second layer of 8*µ*m in thickness was formed on the first layer, so that a double-covered, insulated electric wire suited for soldering was made with an internal layer and an external layer.

### Reference example 20

With the coating insulating material of the modified polyester imide prepared in the reference example 17, the coated internal layer was formed. In other aspects, through the same processes as in the embodiment example 21, a double-covered, insulated electric wire suited for soldering was made with the internal layer and the external layer.

### Embodiment example 22

For the cohesive insulating material, there was used the one of polyamide available in the goods named PA-27 from Dainichi Seika Co., Ltd. In other aspects, through the same processes as in the embodiment example 21, a double-covered, insulated electric wire suited for soldering was made with the internal layer and the external layer.

### Reference example 21

With the coating insulating material of the polyester imide prepared in the reference example 17, the coated internal layer was formed. In other aspects, through the same processes as in the embodiment example 22, a double-covered, insulated electric wire suited for soldering was made with the internal layer and the external layer.

For each of the insulated electric wires obtained in the above-described embodiment examples 18 to 22 and reference examples 17 to 21, various tests were conducted in respect of outward appearance, softening-resistance, favorability to soldering, heat and shock resistance, abrasion resistance, and cohesiveness. The outcomes of these tests are shown hereinafter in Table 7. The tests on heat and shock resistance, abrasion resistance, and cohesiveness were conducted according to the appropriate provisions of JIS ( Japanese Industry Standard ). The remaining properties were tested according to the same methods as mentioned above. of 180 °C

| | |
|---|---|
| Heat and shock resistance | JIS C 3003 13. 1 ( 2 ) |
| Abrasion resistance | JIS C 3003 3. 10 |
| Cohesiveness | JIS C 3003 17. |

**Table 7**

| | Appearance | Heat and shock resistance | Softening resistance ( °C ) | Favorability to soldering at 460°C (seconds) | Abrasion resistance (g) | Cohesiveness at 160 °C for ten minutes |
|---|---|---|---|---|---|---|
| Embodiment example 18 | Good | Good as kept to the same diameter | 430 | 5 | - | - |
| Reference example 17 | Good | Good as kept to the same diameter | 340 | 12 | ― | ― |
| Embodiment example 19 | Good | Good as kept to the same diameter | 420 | 5 | ― | ― |
| Reference example 18 | Good | Good as kept to the same diameter | 330 | 12 | ― | ― |
| Embodiment example 20 | Good | Good as kept to the same diameter | 410 | 3 | 1100 | ― |
| Reference example 19 | Good | Good as kept to the same diameter | 300 | 8 | 750 | ― |
| Embodiment example 21 | Good | Good as kept to the same diameter | 410 | 5 | ― | 600 |
| Reference example 20 | Good | Good as kept to the same diameter | 320 | 12 | ― | 600 |
| Embodiment example 22 | Good | Good as kept to the same diameter | 400 | 3 | ― | 1000 |
| Reference example 21 | Good | Good as kept to the same diameter | 300 | 8 | ― | 1000 |

Table 7 shows the insulated electric wires coated with two insulating layers which includes an internal layer of the insulating material favor to soldering and an external layer of a different insulating material. Compared with the double-coated electric wires in the reference examples 17 to 21 using the conventional insulating material of modified polyester imide for the internal layer, the insulated electric wires of the present invention in the embodiment example 18 to 22 using the specific polyamide-imide for the internal layer had a greatly enhanced heat resistance and an improved favorability to soldering, and had a sufficient degree of other required properties. Where the polyamide were used for the external layer as in the embodiment example 25 and the reference example 19, the abrasion resistance was greatly enhanced.

## Claims

1. An insulated electric wire suited for soldering which comprises a conductor and an insulating layer of a coating insulating material applied to the conductor and then baked wherein the coating insulating material is of a polyamide-imide formed from reaction of an anhydrotrimellitic acid, aliphatic and aromatic dicarboxylic acids and a diisocyanate compound with a mole ratio of the diisocyanate compound to all of said acids being in a range of 0.9 : 1.0 to 1.1 : 1.0, a mole ratio of the anhydrotrimellitic acid to all of said acids in a range of 0.2 : 1.0 to 0.7 : 1.0 and a mole ratio of the aliphatic dicarboxylic acid to all of said acids in a range of 0.2 : 1.0 to 0.7 : 1.0.

2. An insulated electric wire suited for soldering as defined in claim 1, wherein said insulating layer existing on the conductor is coated with at least one external layer of an additional insulating material of polyimide or polyamide-imide different from the polyamide-imide of the said existing layer which is formed by applying and baking the additional insulating material.

3. An insulated electric wire suited for soldering as defined in claim 1, wherein said insulating layer existing on the conductor is coated with at least one external layer of an additional insulating material of polyamide which is formed by applying and baking the additional insulating material.

4. An insulated electric wire suited for soldering as defined in claim 1, wherein said insulating layer existing on the conductor is coated with at least one external layer of an additional insulating material having a property of cohesiveness which is formed by applying and baking the additional insulating material.

5. An insulated electric wire suited for soldering which comprises a conductor and an insulating layer of a coating insulating material applied to the conductor and then baked wherein the coating insulating material contains a polyamide-imide as a main component and an epoxy resin in proportions of 1 to 30 parts by weight of the epoxy resin to 100 parts by weight of the polyamide-imide, the polyamide-imide being formed from reaction of an anhydrotrimellitic acid, a dicarboxylic acid including an aliphatic dicarboxylic acid in a mole proportion of more than 70% and a diissocyanate compound with a mole proportion of the diisocyanate compound to all of said acids being in a range of 0.9 : 1.0 to 1.1 : 1.0 and a mole ratio of the anhydrotrimellitic acid to the dicarboxylic acid in a range of 4 : 6 to 8 : 2.

6. An insulated electric wire suited for soldering as defined in claim 5, wherein the epoxy resin is of a bisphenol bromide A type.

7. An insulated electric wire suited for soldering as defined in claim 5 or 6, wherein said insulated layer existing on the conductor is further coated with at least one external layer of an additional insulating material of polyimide which is formed by applying and baking the additional insulating material.

8. An insulated electric wire suited for soldering as defined in claim 5 or 6, wherein said insulating layer existing on the conductor is further coated with at least one external layer of an additional insulating material of polyamide-imide which is formed by applying and baking the additional insulating material.

9. An insulated electric wire suited for soldering as defined in claim 5 or 6, wherein said insulating layer existing on the conductor is further coated with at least one external layer of an additional insulating material of polyamide which is formed by applying and baking the additional insulating material.

10. An insulated electric wire suited for soldering as defined in claim 5 or 6, wherein said insulating layer existing on the conductor is further coated with at least one external layer of an additional insulating material having a property of cohesiveness which is formed by applying and baking the additional insulating material.

## Patentansprüche

1. Ein zum Löten geeigneter isolierter elektrischer Draht, der einen Leiter und eine isolierende Schicht aus einem auf den Leiter aufgebrachten und dann gebrannten isolierenden Überzugsmaterial umfasst, wobei das isolierende Überzugsmaterial aus einem Polyamidimid besteht, das aus Umsetzung von Anhydrotrimellitsäure, aliphatischen und aromatischen Dicarbonsäuren und einer Diisocyanatverbindung gebildet wird mit einem Molverhältnis der Diisocyanatverbindung zu allen Säuren in einem Bereich von 0,9 : 1,0 bis 1,1 : 1,0, einem Molverhältnis von Anhydrotrimellitsäure zu allen Säuren im Bereich von 0,2 : 1,0 bis 0,7 : 1,0 und einem Molverhältnis von aliphatischer Dicarbonsäure zu allen Säuren in einem Bereich von 0,2 : 1,0 bis 0,7 : 1,0.

2. Ein zum Löten geeigneter isolierter elektrischer Draht gemäß Anspruch 1, wobei die auf dem Leiter vorhandene isolierende Schicht mit wenigstens einer äußeren Schicht aus einem zusätzlichen isolierenden Material aus von dem Polyamidimid der vorhandenen Schicht verschiedenen Polyimid oder Polyamid überzogen ist, die durch Aufbringen und Brennen des zusätzlichen isolierenden Materials gebildet wird.

3. Ein zum Löten geeigneter isolierter elektrischer Draht gemäß Anspruch 1, wobei die auf dem Leiter vorhandene isolierende Schicht mit wenigstens einer äußeren Schicht aus einem zusätzlichen isolierenden Material aus Polyamid überzogen ist, die durch Aufbringen und Brennen des zusätzlichen isolierenden Materials gebildet wird.

4. Ein zum Löten geeigneter isolierter elektrischer Draht gemäß Anspruch 1, wobei die auf dem Leiter vorhandene isolierende Schicht mit wenigstens einer äußeren Schicht aus einem zusätzlichen isolierenden Material mit Kohäsionseigenschaft überzogen ist, die durch Aufbringen und Brennen des zusätzlichen isolierenden Materials gebildet wird.

5. Ein zum Löten geeigneter isolierter elektrischer Draht, der einen Leiter und eine isolierende Schicht aus einem auf den Leiter aufgebrachten und dann gebrannten isolierenden Überzugsmaterial umfasst, wobei das isolierende Überzugsmaterial ein Polyamidimid als Hauptkomponente und ein Epoxyharz enthält, in Verhältnissen von 1 : 30 Gewichtsteilen des Epoxyharzes zu 100 Gewichtsteilen des Polyamidimids, wobei das Polyamidimid durch Umsetzung einer Anhydrotrimellitsäure, einer Dicarbonsäure, die eine aliphatische Dicarbonsäure in einem Molverhältnis von mehr als 70 % einschließt, und einer Diisocyanatverbindung mit einem Molverhältnis der Diisocyanatverbindung zu allen Säuren in einem Bereich von 0,9 : 1,0 bis 1,1 : 1,0 und einem Molverhältnis von Anhydrotrimellitsäure zu der Dicarbonsäure im Bereich von 4 : 6 bis 8 : 2.

6. Ein zum Löten geeigneter isolierter elektrischer Draht gemäß Anspruch 5, wobei das Epoxyharz vom Typ Bisphenol-Brom A ist.

7. Ein zum Löten geeigneter isolierter elektrischer Draht gemäß Anspruch 5 oder 6, wobei die auf dem Leiter vorhandene isolierende Schicht ferner mit wenigstens einer äußeren Schicht aus einem zusätzlichen isolierenden Material aus Polyimid überzogen ist, die durch Aufbringen und Brennen des zusätzlichen isolierenden Materials gebildet wird.

8. Ein zum Löten geeigneter isolierter elektrischer Draht gemäß Anspruch 5 oder 6, wobei die auf dem Leiter vorhandene isolierende Schicht ferner mit wenigstens einer äußeren Schicht aus einem zusätzlichen Material aus Polyamidimid überzogen ist, die durch Aufbringen und Brennen des zusätzlichen isolierenden Materials gebildet wird.

9. Ein zum Löten geeigneter isolierter elektrischer Draht gemäß Anspruch 5 oder 6, wobei die auf dem Leiter vorhandene isolierende Schicht ferner mit wenigstens einer äußeren Schicht aus einem zusätzlichen isolierenden Material aus Polyamid überzogen ist, die durch Aufbringen und Brennen des zusätzlichen isolierenden Materials gebildet wird.

10. Ein zum Löten geeigneter isolierter elektrischer Draht gemäß Anspruch 5 oder 6, wobei die auf dem Leiter vorhandene isolierende Schicht ferner mit wenigstens einer äußeren Schicht aus einem zusätzlichen isolierenden Material mit einer Kohäsionseigenschaft überzogen ist, die durch Aufbringen und Brennen des zusätzlichen isolierenden Materials gebildet wird.

## Revendications

1. Fil électrique isolé adapté pour le soudage qui comprend un conducteur et une couche isolante d'un revêtement de matériau isolant appliquée au conducteur et ensuite cuite, caractérisé en ce que le revêtement de matériau isolant est un polyamide-imide formé par réaction d'un acide trimellitique anhydre, d'acides dicarboxyliques aliphatiques et aromatiques et d'un composé diisocyanate avec un rapport molaire du composé diisocyanate à l'ensemble desdits acides étant dans une plage de 0,9 : 1,0 à 1,1 : 1,0, un rapport molaire de l'acide trimellitique anhydre à l'ensemble desdits acides dans une plage de 0,2 : 1,0 à 0,7 : 1,0 et un rapport molaire de l'acide dicarboxylique aliphatique à l'ensemble desdits acides dans une plage de 0,2: 1,0 à 0,7 : 1,0.

2. Fil électrique isolé adapté pour le soudage tel que défini dans la revendication 1, caractérisé en ce que la couche isolante existant sur le conducteur est revêtue d'au moins une couche externe d'un matériau isolant additionnel de polyimide ou de polyamide-imide différent du polyamide-imide de ladite couche existante qui est formée par application et cuisson du matériau isolant additionnel.

3. Fil électrique isolé adapté pour le soudage tel que défini dans la revendication 1, caractérisé en ce que ladite couche isolante existant sur le conducteur est revêtue d'au moins une couche externe d'un matériau isolant additionnel de polyamide qui est formée par application et cuisson du matériau isolant additionnel.

4. Fil électrique isolé adapté pour le soudage tel que défini dans la revendication 1, caractérisé en ce que ladite couche isolante existant sur le conducteur est revêtue d'au moins une couche externe d'un matériau isolant additionnel ayant une propriété de cohésion qui est formée par application et cuisson du matériau isolant additionnel.

5. Fil électrique isolé adapté pour le soudage qui comprend un conducteur et une couche isolante d'un revêtement de matériau isolant appliquée au conducteur et ensuite cuite, caractérisé en ce que la couche de matériau isolant contient un polyamide-imide comme composant principal et une résine époxy dans des proportions de 1 à 30 parties en poids de la résine époxy pour 100 parties en poids du polyamide-imide, le polyamide-imide étant formé par réaction d'un acide trimellitique anhydre, d'un acide dicarboxylique comprenant un acide dicarboxylique aliphatique en une proportion en moles de plus de 70% et d'un composé diisocyanate avec une proportion en moles du composé diisocyanate par rapport à l'ensemble desdits acides étant dans une plage de 0,9 : 1,0 à 1,1 : 1,0 et un rapport en moles de l'acide trimellitique anhydre à l'acide dicarboxylique dans une plage de 4 : 6 à 8 : 2.

6. Fil électrique isolé adapté pour le soudage tel que défini dans la revendication 5, caractérisé en ce que la résine époxy est du type A bromure de bisphénol.

7. Fil électrique isolé adapté pour le soudage tel que défini dans la revendication 5 ou 6, caractérisé en ce que ladite couche isolante existant sur le conducteur est en outre revêtue d'au moins une couche externe d'un matériau isolant additionnel de polyimide qui est formée par application et cuisson du matériau isolant additionnel.

8. Fil électrique isolé adapté pour le soudage tel que défini dans la revendication 5 ou 6, caractérisé en ce que ladite couche isolante existant sur le conducteur est en outre revêtue d'au moins une couche externe d'un matériau isolant additionnel de polyamide-imide qui est formée par application et cuisson du matériau isolant additionnel.

9. Fil électrique isolé adapté pour le soudage tel que défini dans la revendication 5 ou 6, caractérisé en ce que ladite couche isolante existant sur le conducteur est en outre revêtue d'au moins une couche externe d'un matériau isolant additionnel de polyamide qui est formée par application et cuisson du matériau isolant additionnel.

10. Fil électrique isolé adapté pour le soudage tel que défini dans la revendication 5 ou 6, caractérisé en ce que ladite couche isolante existant sur le conducteur est en outre revêtue d'au moins une couche externe d'un matériau isolant additionnel ayant une propriété de cohésion qui est formée par application et cuisson du matériau isolant additionnel.
